# EUROPÄISCHE PATENTSCHRIFT

(11) **EP 1 152 924 B1**
(45) Veröffentlichungstag und Bekanntmachung des Hinweises auf die Patenterteilung: **02.01.2004**
(21) Anmeldenummer: 00988659.9
(22) Anmeldetag: 25.11.2000
(51) Int. Cl.: B60R 16/08, G05D 16/20

(54) **FAHRZEUGPNEUMATIK-ÜBERDRUCKREGLERSCHALTUNG**
OVERPRESSURE CONTROL CIRCUIT FOR VEHICLE PNEUMATIC SYSTEM
CIRCUIT DE REGULATION DE SURPRESSION POUR CONSOMMATEUR PNEUMATIQUE SITUE DANS UN VEHICULE

(30) Priorität: 07.12.1999 DE 19958912
(43) Veröffentlichungstag der Anmeldung: 14.11.2001
(73) Patentinhaber: ROBERT BOSCH GMBH, 70442 Stuttgart (DE)
(72) Erfinder: PAESSLER, Wolfgang, 77833 Ottersweier (DE); KONRAD, Daniel, 76133 Karlsruhe (DE); SCHRADER, Jens, 77830 Buehlertal (DE)
(86) Internationale Anmeldenummer: PCT/DE2000/004194
(87) Internationale Veröffentlichungsnummer: WO 2001/042056

(56) Entgegenhaltungen:
- EP-A- 0 463 353

## Beschreibung

Die vorliegende Erfindung betrifft eine Fahrzeugpneumatik-Überdruckreglerschaltung. Diese wird zur Versorgung eines pneumatischen Verbrauchers eines Fahrzeugs mit einem Betriebsdruck eingesetzt, wobei der Verbraucher in einem Innenraum angeordnet ist. Der Innenraum ist dabei die Fahrgastzelle. Die Überdruckreglerschaltung hat eine Druckluftquelle, die Druckluft für den Verbraucher liefert. Ebenso weist die Überdruckreglerschaltung einen Druckschalter auf, mittels dem die Druckluftquelle zur Versorgung der Druckluft zu- oder abgeschaltet wird, sowie eine Versorgungsleitung, über die Druckluft von der Druckluftquelle zu dem Verbraucher geleitet werden kann.

Bisher werden zur Versorgung von pneumatischen Verbrauchern in einem Innenraum eines Fahrzeuges Druckschalteranordnungen verwendet, bei denen entweder der Druckschalter unmittelbar hinter dem Kompressor angeordnet wird, oder aber der Druckschalter sich direkt am Verbraucher befindet.

### Vorteile der Erfindung

Die Fahrzeugpneumatik-Überdruckreglerschaltung erlaubt es, daß der Druckschalter äußerst präzise schaltbar ist durch eine Anordnung einer durch eine Versorgungsleitung getrennten Pneumatik-Meßleitung. Dadurch ist der Schalter unabhängig von hinter einer Druckluftquelle angeordneten Leitungsstrecken bzw. Drosselungen. Während diese ansonsten zum Aufbau eines Staudrucks führten, wodurch ein Druckschaltpunkt an einem Druckschalter erreicht wird, der früher liegt als ohne diese Leitungsstrecken bzw. Drosselungen, sorgt die Meßleitung für eine direkte Messung vom Verbraucher, so daß Abweichungen entfallen, wie sie ansonsten beispielsweise durch eine Motor- bzw. Pumpenkennlinie sowie einer Temperatur der Druckluft in der Versorgungsleitung aufgeprägt werden.

Eine Fahrzeugpneumatik-Überdruckreglerschaltung gemäß dem Oberbegriff von Anspruch 1 bzw. ein Verfahren zum Betrieb einer solchen (Oberbegriff Anspruch 7) ist im Stand der Technik allgemein bekannt.

Weiterhin zeichnet sich die vorgeschlagene Anordnung dadurch aus, daß sie äußerst robust ist, da die Meßleitung unabhängig von der Versorgungsleitung ist. Diese Robustheit, welche sich auch dadurch ergibt, daß der Druckschalter nicht Schmutz und Witterung ausgesetzt ist, nutzt auch das vorgeschlagene Verfahren zum Betrieb einer Fahrzeugpneumatik-Überdruckregelung eines pneumatischen Verbrauchers, welcher auch im Motorraum z.B. als pneumatischer Steller mit Ansteuerung über ein Elektromagnetventil untergebracht sein kann, in einem Fahrzeug, insbesondere in dessen Innenraum, aus. Damit sind pneumatische Verbraucher wie Zentralverriegelungsstellelemente, Luftblasen in Sitzkissen und/oder Lehnen im Fahrzeug sehr genau bezüglich ihres Druckluftbedarfes steuer- bzw. regelbar.

Eine besonders vorteilhafte Ausgestaltung sieht vor, daß die Druckluftquelle, insbesondere ein Luftkompressor z.B. einer Flügelzellen- oder Membranpumpe sowie der Druckschalter selbst in einem gemeinsamen Gehäuse angelegt sind. Auf diese Weise gelingt es, eine kompakte Konstruktion zu gewährleisten, welche eine Trennung vom Verbraucher ermöglicht. Dies unterstützt zum einen eine Auswechselbarkeit dieser gesamten Komponente wie auch einen geringeren Aufwand bezüglich notwendiger Geräuschdämmungen. Die pneumatisch betriebenen Elemente befinden sich in dem einzigen Gehäuse, so daß nur dieses mit einer entsprechenden Geräuschdämmung versehen werden muß. Diese Geräuschdämmung ist insbesondere dann mit nur geringem Aufwand verbunden, wenn sich der Verbraucher an akustisch exponierter Stelle befindet, während das Gehäuse mit Komponenten hiervon entfernt getrennt angeordnet ist.

Weiterhin ist es zweckmäßig, wenn Druckschalter wie Druckluftquelle bzw. ein Auslöser für die Druckluftquelle an eine Steuerelektronik mit Sicherheitsfunktionen, insbesondere Leckerkennung, angeschlossen sind. Das heißt, die Druckluftquelle (Pumpe) wird nach Überschreiten einer programmierten Laufzeit, während derer der druckbedingte Abschaltpunkt nicht erreicht wird, abgeschaltet (Leck oder Pumpenfehlfunktion). Der Druckschalter, beispielsweise ein mechanischer Druckschalter, weist einen Einschalt- bzw. Abschaltpunkt auf, der insbesondere einstellbar ist. Diese Schaltpunkte werden als elektrische Signale von einer Ansteuerelektronik für die Kompression ausgewertet, welche beispielsweise eine analoge Schaltung sein kann. Wird ein gewünschter Mindestbetriebsdruck aufgrund des in der Pneumatik-Meßleitung aufgeprägten Meßdruckes als zu gering angezeigt, löst der Druckschalter ein elektrisches Signal aus, so daß die Druckluftquelle beginnt, den notwendigen Druckluftbedarf für den Verbraucher zu dekken. Dazu kann beispielsweise unter Verwendung einer Bidruckpumpe oder eines Kompressors das Signal, welches einen Druckluftbedarf angibt, einen Schaltkontakt zum Anlaufen des Kompressors auslösen. Gemäß einer weiteren Ausgestaltung kann die Druckluftquelle selbst ein Speicher sein, aus dem der Druckluftbedarf gedeckt wird. Der Druckluftspeicher selbst wird je nach Bedarf wiederum über einen entsprechenden Kompressor mit Druckluft gefüllt.

### Figuren

Weitere vorteilhafte Ausgestaltungen und Weiterbildungen sowie zweckmäßige Merkmale der Erfindung sind in der nachfolgenden Zeichnung näher erläutert. Es zeigen:
- Fig. 1: ein Schaltungsschema einer Fahrzeugpneumatik-Überdruckreglerschaltung;
- Fig. 2: einen Druckanstieg in einer Überdruckreglerschaltung gemäß des Standes der Technik; und
- Fig. 3: einen Druckanstieg in einer Überdruckreglerschaltung gemäß der vorliegenden Erfindung.

### Beschreibung der bevorzugten Ausführungsbeispiele

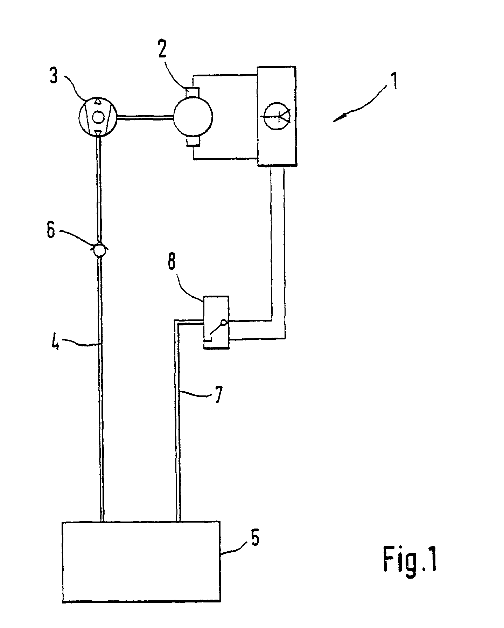

Figur 1 zeigt eine Fahrzeugpneumatik-Überdruckreglerschaltung 1. Diese Überdruckreglerschaltung 1 hat einen Elektromotor 2, der eine Pumpe 3 antreibt. Die Pumpe 3 ist mittels einer Versorgungsleitung 4 mit einem Verbraucher 5 verbunden. Über die Versorgungsleitung 4 erhält der Verbraucher 5 komprimierte Luft, um einen notwendigen Betriebsdruck des Verbrauchers 5 zu decken. Zwischen der Pumpe 3 und dem Verbraucher 5 ist in der Versorgungsleitung 4 ein Rückschlagventil 6 vorgesehen. Da der Verbraucher 5 die ihm zugeführte Druckluft für verschiedene Einsatzzwecke verwendet, beispielsweise für das Öffnen einer Türverriegelung, das Anpassen eines Fahrersitzes oder anderer druckluftbetriebener Verstellmöglichkeiten, die insbesondere in einer Fahrgastzelle eines Fahrzeuges betrieben werden, fällt der Betriebsdruck im Verbraucher 5 schließlich unter einen Mindestbetriebsdruck ab. Mittels einer Meßleitung 7 wird nun ein Druckschalter 8 mit einem Meßdruck beaufschlagt. Der Meßdruck charakterisiert einen Zustand des Betriebsdruckes des Verbrauchers 5. Der Druckschalter 8 weist nur ein Kontaktpaar auf, d.h. er ist in der Lage, Stromfluß herzustellen oder zu unterbrechen. Zum Unterbrechen ist eine Nachlaufzeit der Pumpe von beispielsweise ca. 0,4 einprogrammiert, damit die Kontakte sicher getrennt sind.

Es ist jedoch bei einem Druckschalter mit zwei Kontaktpaaren auch möglich, daß der Meßdruck den Betriebsdruck direkt angibt. Dazu ist beispielsweise die Meßleitung 7 als eine Rückführungsleitung ausgestattet mit dem im Verbraucher 5 herrschenden Betriebsdruck. Der Druckschalter 8 ist in der Lage, auf die auf ihn aufgeprägten Betriebsdrücke zu reagieren. Bei Unterschreiten eines Mindestdrukkes wird ein Einschaltpunkt realisiert. Der Druckschalter 8 löst ein Signal aus, wodurch der Verbraucher 5 wieder mit Druckluft versorgt wird. Diese Druckluftversorgung hält vorzugsweise so lange an, bis ein Höchstdruck am Druckschalter 8 anliegt. Dann wird ein zweites Signal ausgelöst, welches bewirkt, daß eine Zufuhr mit Druckluft zum Verbraucher 5 wieder unterbrochen wird. Der Druckschalter 8 weist somit bei Vorhandensein von zwei Kontaktpaaren vorzugsweise einen Einschalt- und einen Abschaltpunkt auf. Diese sind insbesondere einstellbar, so daß ein Druckschalter 8 kompatibel für mehrere Verbraucher sein kann. Auch besteht die Möglichkeit, den Druckschalter 8 bezüglich seiner Schaltpunkte so variabel einstellen zu können, daß Umwelteinflüsse, wie hohe Temperaturen oder ähnliches, die sich auf den Betriebsdruck im Verbraucher 5 auswirken, ebenfalls erfaßbar sind.

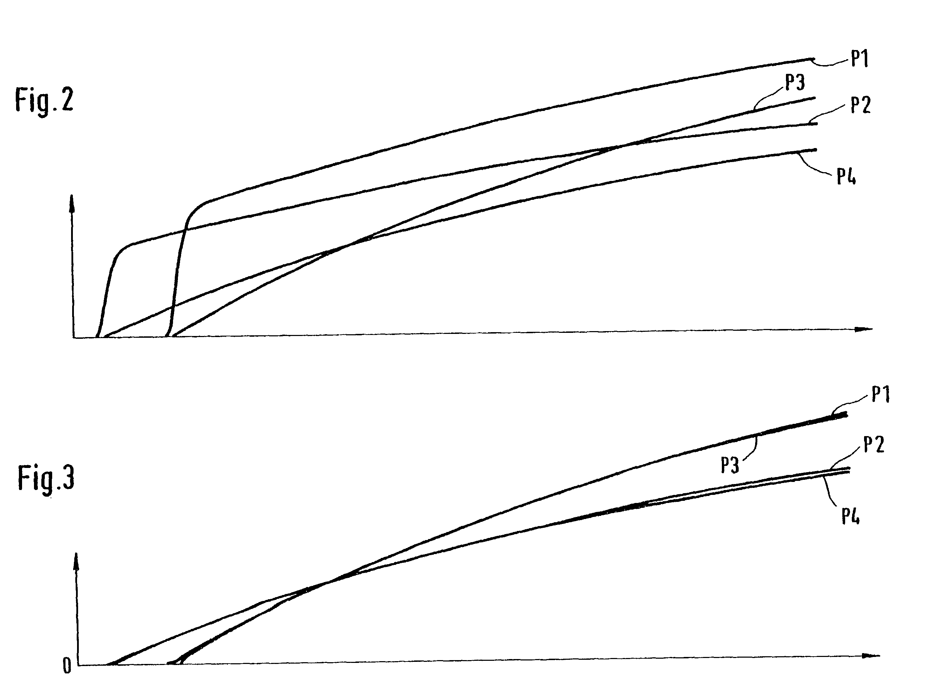

Figur 2 zeigt ein Koordinatensystem, bei dem die X-Achse die Zeit angibt, während die Y-Achse Druck wiedergibt, der in einer Überdruckreglerschaltung herrscht. Das in Fig. 2 gezeigte Druck/Zeit-Verhalten ist anhand einer Fahrzeugpneumatik-Überdruckreglerschaltung aufgenommen worden, wie sie aus dem Stand der Technik bekannt ist. Der Druckschalter war dabei hinter der Pumpe direkt an die Versorgungsleitung angeschlossen. Die angezeigten Druckverläufe spiegeln den Aufbau eines Staudruckes in der Versorgungsleitung wieder. Die durch den Druckschalter wahrgenommenen Drücke sind mit P1 und P2 bezeichnet. Die am Verbraucher anliegenden Betriebsdrücke dagegen sind mit P3 und P4 gekennzeichnet.

Gleichzeitig sind in Fig. 2 zwei unterschiedliche Betriebsweisen dargestellt. Die erste Betriebsweise ergibt sich bei Betrieb des die Pumpe antreibenden Elektromotors bei einer geringeren Spannung gegenüber der zweiten Betriebsweise mit einer höheren Spannung. Dieses ist an dem sich höher aufbauenden Druck bei höher verwendeter Motorenspannung erkennbar. Die Drücke P1 und P3 sind daher bei dieser höheren Betriebsspannung aufgenommen worden, während die Drücke P2 und P4 bei niedrigerer Betriebsspannung des Elektromotors erzeugt worden sind. Aus Fig. 2 ist nun zu entnehmen, daß zwischen dem Druck am Verbraucher, beispielsweise P3, und dem durch den Druckschalter wahrgenommenen Druck in der Versorgungsleitung P1 ein nicht unerheblicher Abstand vorliegt, der für eine Abweichung bei der Regelung des Betriebsdrucks und des Verbrauchers sorgt. Die Differenz zwischen dem Betriebsdruck P3 und dem gemessenen Druck P1 kann beispielsweise zwischen 50 und 200 mbar betragen, wobei bei kurzfristigem Aufbau des Betriebsdruckes beispielsweise in der Größenordnung von 0,1-1 Sekunden sehr viel größere Abweichungen auftreten als bei zeitlich späteren Druckmessungen. Ebenfalls festzuhalten ist, daß je höher der vom Verbraucher benötigte Druck ist, desto größer ist auch die Abweichung zwischen dem Betriebsdruck und dem durch den Druckschalter wahrgenommenen Druck in der Versorgungsleitung. Die Druckdifferenz hängt wesentlich auch von der Steigung der Pumpenkennlinie sowie dem Querschnitt der Pneumatik-Leitung und damit der Rohrreibung und Drosselung ab.

Figur 3 zeigt das Verhalten der beanspruchten Überdruckreglerschaltung, wobei der am Druckschalter aufgenommene Druck P 1 und P2 diesmal über eine von der Versorgungsleitung getrennte Pneumatik-Meßleitung aufgeprägt ist, über die der Zustand des Betriebsdruckes des Verbrauchers charakterisiert wird. Die Bezeichnungen der Drücke P1 bis P4 ist dabei übereinstimmend mit derjenigen aus Fig. 2. Festzustellen ist, daß die vorgeschlagene Überdruckreglerschaltung es ermöglicht, eine äußerst präzise Ansteuerung des Druckschalters zu gewährleisten, so daß der Verbraucher immer den nötigen Betriebsdruck erhält. Eine Abweichung zwischen dem Druck P1 am Druckschalter und dem Druck P3 am Verbraucher fällt äußerst gering aus und ist quasi nicht mehr feststellbar. Dieses erlaubt eine präzise Einstellung des Druckschalters, so daß sichergestellt ist, daß nicht nur ein Mindestdruck im Verbraucher, sondern ebenfalls auch ein Höchstdruck eingehalten wird. Neben dieser Verbesserung des Betriebs einer Fahrzeugpneumatik-Überdruckregelung erlaubt dieses auch, ein Kompaktsystem in einem Gehäuse aus einem Elektromotor, Druckluftquelle und Druckschalter zu bauen, da Ausgleichseinrichtungen, wie man sie bisher hätte vorsehen müssen, um die Abweichungen zwischen dem tatsächlichen und dem gemessenen Druck ausschalten zu können, nun entfallen. Auch erlaubt ein kompaktes Gehäuse mit allen notwendigen Bauteilen einen einfacheren Austausch gegenüber Systemen, die in einem Fahrzeug an unterschiedlichen Stellen angebracht sind und dort jeweils einzeln ausgebaut, überprüft und eventuell ausgetauscht werden müssen.

### Bezugszeichenliste

- 1: Fahrzeugpneumatik-Überdruckreglerschaltung
- 2: Elektromotor
- 3: Pumpe
- 4: Versorgungsleitung
- 5: Verbraucher
- 6: Rückschlagventil
- 7: Meßleitung
- 8: Druckschalter

- P 1: Druck am Druckschalter bei hoher Elektromotorspannung
- P2: Druck am Druckschalter bei niedriger Elektromotorspannung
- P3: Druck am Verbraucher bei hoher Elektromotorspannung
- P4: Druck am Verbraucher bei niedriger Elektromotorspannung

## Patentansprüche

1. Fahrzeugpneumatik-Überdruckreglerschaltung (1) einer Versorgungseinrichtung eines pneumatischen Verbrauchers (5) in einem Fahrzeug mit einem Betriebsdruck mit
- einer Druckluftquelle (3), welche Druckluft für den Verbraucher (5) liefert,
- einem Druckschalter (8), mittels dem die Druckluftquelle (3) zur Versorgung des Verbrauchers (5) mit Druckluft zu- und/oder abgeschaltet wird, und
- einer Versorgungsleitung (4), über welche Druckluft von der Druckluftquelle (3) zu dem Verbraucher (5) geleitet werden kann,
**dadurch gekennzeichnet, daß**
der Druckschalter (8) über eine von der Versorgungsleitung (4) getrennte Pneumatik-Meßleitung (7) mit einem Meßdruck beaufschlagbar ist, welcher einen Zustand des Betriebsdruckes des Verbrauchers (5) charakterisiert.

2. Fahrzeugpneumatik-Überdruckreglerschaltung (1) nach Anspruch 1, **dadurch gekennzeichnet, daß** die Druckluftquelle (3) und der Druckschalter (8) in einem gemeinsamen Gehäuse angeordnet sind, während der Verbraucher (5) zu diesem Gehäuse beabstandet ist.

3. Fahrzeugpneumatik-Überdruckreglerschaltung (1) nach Anspruch 1 oder 2, **dadurch gekennzeichnet, daß** die Druckluftquelle (3) und der Druckschalter (8) an eine Steuerelektronik mit Sicherheitsfunktionen, insbesondere Leckerkennung, angeschlossen sind, so daß über diese eine Information zwischen der Druckluftquelle (3) und dem Druckschalter (8) austauschbar ist.

4. Fahrzeugpneumatik-Überdruckreglerschaltung (1) nach einem der Ansprüche 1 bis 3, **dadurch gekennzeichnet, daß** der Druckschalter (8) so eingestellt ist, daß bei Unterschreiten eines vorgebbaren Druckschaltpunktes ein Schaltkontakt betätigt wird, welcher die Druckluftquelle (3) zuschaltet.

5. Fahrzeugpneumatik-Überdruckreglerschaltung (1) nach einem der vorhergehenden Ansprüche, **dadurch gekennzeichnet, daß** die Meßleitung den Druckschalter (8) direkt mit dem Betriebsdruck des Verbrauchers (5) beaufschlagt.

6. Fahrzeugpneumatik-Überdruckreglerschaltung (1) nach einem der vorhergehenden Ansprüche, **dadurch gekennzeichnet, daß** die Druckluftquelle (3) ein ein- wie ausschaltbarer Luftkomprimierer ist, insbesondere ein Luftkompressor in der Form einer Flügelzellen- oder Membranpumpe.

7. Verfahren zum Betrieb einer Fahrzeugpneumatik-Überdruckregelung eines pneumatischen Verbrauchers (5) in einem Innenraum eines Fahrzeuges, wobei
- der Verbraucher (5) mit Druckluft von einer Druckluftquelle (3) über eine Versorgungsleitung (4) versorgt wird, wodurch der Verbraucher (5) seinen Betriebsdruck erhält,
- die Druckluftquelle (3) zum Halten des Betriebsdruckes zu- und abgeschaltet wird und
- das Zuschalten oder das Zu- und Abschalten der Druckluftquelle (3) über einen Druckschalter (8) erfolgt,
**dadurch gekennzeichnet, daß**
der Druckschalter (8) mit einem den Betriebsdruck charakterisierenden Meßdruck beaufschlagt wird, der direkt vom Verbraucher (5) stammt und getrennt von einem Druck in der Versorgungsleitung (4) zum Druckschalter (8) über eine Pneumatik-Meßleitung geliefert wird, wodurch ein Beaufschlagen des Verbrauchers (5) mit Druckluft aus der Druckluftquelle (3) auslösbar ist.

8. Verfahren nach Anspruch 7, **dadurch gekennzeichnet, daß** der Druckschalter (8) mit dem Betriebsdruck des Verbrauchers (5) direkt beaufschlagt wird.

9. Verfahren nach Anspruch 7 oder 8, **dadurch gekennzeichnet, daß** als Druckluftquelle (3) ein Kompressor verwendet wird, der zur Drucklufterzeugung eingeschaltet wird, wenn ein Mindestdruck an dem Druckschalter (8) unterschritten wird.

10. Verfahren nach einem der Ansprüche 7 bis 9, **dadurch gekennzeichnet, daß** ein Signal vom Druckschalter (8) über eine elektrische oder elektronische Schaltung zu einem Auslöser übertragen wird, um ein Beaufschlagen des Verbrauchers (5) mit Druckluft mittels der Druckluftquelle (3) auszulösen.

## Claims

1. Excess-pressure controller circuit (1) for vehicle pneumatics, of a supply device of a pneumatic consumer (5) in a vehicle having an operating pressure, with
- a compressed-air source (3) which delivers compressed air for the consumer (5),
- a pressure switch (8), by means of which the compressed-air source (3) is cut in for the supply of compressed air to the consumer (5) and/or is cut out, and
- a supply line (4), via which compressed air can be conducted from the compressed-air source (3) to the consumer (5),
**characterized in that**
the pressure switch (8) can be acted upon, via a pneumatic measurement line (7) separated from the supply line (4) to a measurement pressure which characterizes a state of the operating pressure of the consumer (5).

2. Excess-pressure controller circuit (1) for vehicle pneumatics according to Claim 1, **characterized in that** the compressed air source (3) and the pressure switch (8) are arranged in a common housing, whilst the consumer (5) is spaced apart from this housing.

3. Excess-pressure controller circuit (1) for vehicle pneumatics according to Claim 1 or 2, **characterized in that** the compressed air source, and the pressure switch (8) are connected to control electronics with safety functions, in particular leakage detection, so that information can be exchanged between the compressed-air source (3) and the pressure switch (8) via the said control electronics.

4. Excess-pressure controller circuit (1) for vehicle pneumatics according to one of Claims 1 to 3, **characterized in that** the pressure switch (8) is set in such a way that, when the predeterminable pressure switching point is undershot, a switching contact is actuated which cuts in the compressed air source (3).

5. Excess-pressure controller circuit (1) for vehicle pneumatics according to one of the preceding claims, **characterized in that** the measurement line acts directly upon the pressure switch (8) with the operating pressure of the consumer (5).

6. Excess-pressure controller circuit (1) for vehicle pneumatics, according to one of the preceding claims, **characterized in that** the compressed-air source (3) is a connectable and disconnectable air compressor, in particular an air compressor in the form of a vane-cell or diaphragm pump.

7. Method for operating an excess-pressure control for vehicle pneumatics, of a pneumatic consumer (5) in an interior of a vehicle,
- the consumer (5) being supplied with compressed air by a compressed-air source (3) via a supply line (4), with the result that the consumer (5) obtains its operating pressure,
- the compressed-air source (3) being cut in and cut out in order to maintain the operating pressure, and
- the compressed-air source (3) being cut in or being cut in and cut out via a pressure switch (8) ,
**characterized in that**
the pressure switch (8) is acted upon by a measurement pressure which characterizes the operating pressure and which originates directly from the consumer (5) and is delivered, separately from a pressure in the supply line (4), to the pressure switch (8) via a pneumatics measurement line, with the result that action upon the consumer (5) by compressed air from the compressed-air source (3) can be triggered.

8. Method according to Claim 7, **characterized in that** the pressure switch (8) is acted upon directly by the operating pressure of the consumer (5).

9. Method according to Claim 7 or 8, **characterized in that** the compressed-air source (3) used is a compressor which is connected for compressed-air generation when a minimum pressure at the pressure switch (8) is undershot.

10. Method according to one of Claims 7 to 9, **characterized in that** a signal from the pressure switch (8) is transmitted to a trigger via an electrical or electronic circuit, in order to trigger action upon the consumer (5) by compressed air by means of a compressed-air source (3).

## Revendications

1. Circuit de régulation de surpression pneumatique de véhicule (1) d'un dispositif d'alimentation d'un consommateur pneumatique (5) situé dans un véhicule avec une pression de service, comportant :
- une source d'air comprimé (3), qui fournit de l'air comprimé pour le consommateur (5),
- un interrupteur de pression (8), au moyen duquel la source d'air comprimé (3) est connectée et/ou déconnectée pour l'alimentation du consommateur (5) en air comprimé, et
- une conduite d'alimentation (4), qui conduit l'air comprimé de la source d'air comprimé (3) jusqu'au consommateur (5),
**caractérisé en ce que**
l'interrupteur de pression (8) peut être alimenté, par une conduite de mesure pneumatique (7) distincte de la conduite d'alimentation (4), avec une pression de mesure, qui caractérise un état de la pression de service du consommateur (5).

2. Circuit de régulation de surpression pneumatique de véhicule (1) selon la revendication 1,
**caractérisé en ce que**
la source d'air comprimé (3) et l'interrupteur de pression (8) sont disposés dans un boîtier commun, tandis que le consommateur (5) est éloigné de ce boîtier.

3. Circuit de régulation de surpression pneumatique de véhicule (1) selon la revendication 1 ou 2,
**caractérisé en ce que**
la source d'air comprimé (3) et l'interrupteur de pression (8) sont raccordés à une électronique de commande avec des fonctions de sécurité, en particulier de reconnaissance des fuites, de telle façon que celles-ci permettent un échange d'informations entre la source d'air comprimé (3) et l'interrupteur de pression (8).

4. Circuit de régulation de surpression pneumatique de véhicule (1) selon une des revendications 1 à 3,
**caractérisé en ce que**
l'interrupteur de pression (8) est réglé de telle façon qu'en descendant en dessous d'un point de commutation de pression prédéterminé, on actionne un contact de commutation qui connecte la source d'air comprimé (3).

5. Circuit de régulation de surpression pneumatique de véhicule (1) selon l'une quelconque des revendications précédentes,
**caractérisé en ce que**
la conduite de mesure alimente directement l'interrupteur de pression (8) avec la pression de service du consommateur (5).

6. Circuit de régulation de surpression pneumatique de véhicule (1) selon l'une quelconque des revendications précédentes,
**caractérisé en ce que**
la source d'air comprimé (3) est un compresseur d'air pouvant être enclenché et déclenché, en particulier un compresseur d'air sous la forme d'une pompe à cellules semi-rotative ou une pompe à membrane.

7. Procédé de conduite d'un circuit de régulation de surpression pneumatique de véhicule (1) d'un consommateur pneumatique (5) dans un espace intérieur de véhicule,
dans lequel
- le consommateur (5) est alimenté en air comprimé à partir d'une source d'air comprimé (3) par une conduite d'alimentation (4), par laquelle le consommateur (5) reçoit ainsi sa pression de service,
- la source d'air comprimé (3) est connectée et déconnectée pour maintenir la pression de service, et
- la connexion, ou la connexion et déconnexion, de la source d'air comprimé (3) est effectuée par un interrupteur de pression (8),
**caractérisé en ce que**
l'interrupteur de pression (8) est alimenté avec une pression de mesure caractérisant la pression de service, qui émane directement du consommateur (5) et qui est fournie à l'interrupteur de pression (8) par une conduite de mesure pneumatique séparément d'une pression de service dans la conduite d'alimentation (4), et par laquelle une alimentation du consommateur (5) en air comprimé à partir de 1a source d'air comprimé (3) peut être déconnectée.

8. Procédé selon la revendication 7,
**caractérisé en ce que**
l'interrupteur de pression (8) est alimenté directement avec la pression de service du consommateur (5).

9. Procédé selon la revendication 7 ou 8,
**caractérisé en ce que**
l'on utilise comme source d'air comprimé (3), un compresseur qui est enclenché pour la production d'air comprimé, lorsque l'on descend en dessous d'une pression minimale dans l'interrupteur de pression (8).

10. Procédé selon l'une quelconque des revendications 7 à 9,
**caractérisé en ce qu'**
un signal est transmis de l'interrupteur de pression (8), par un circuit électrique ou électronique, à un déclencheur pour déclencher une alimentation du consommateur (5) en air comprimé au moyen de la source d'air comprimé (3).
